# EUROPEAN PATENT SPECIFICATION

(11) **EP 1 873 768 B1**
(45) Date of publication and mention of the grant of the patent: **24.02.2010**
(21) Application number: 06731007.8
(22) Date of filing: 03.04.2006
(51) Int. Cl.: G11B 7/085, G11B 7/005, G11B 7/007, G11B 7/24

(54) **OPTICAL DISK REPRODUCING DEVICE**
WIEDERGABEEINRICHTUNG FÜR OPTISCHE DATENTRÄGER
DISPOSITIF DE REPRODUCTION DE DISQUE OPTIQUE

(30) Priority: 08.04.2005 JP 2005111985
(43) Date of publication of application: 02.01.2008
(73) Proprietor: Panasonic Corporation, Kadoma-shi Osaka 571-8501 (JP)
(72) Inventor: SATO, Michinori c/o Matsushita Electr.Ind., Chuo-ku, Osaka 540-6207 (JP)
(74) Representative: Grünecker, Kinkeldey, Stockmair & Schwanhäusser Anwaltssozietät
(86) International application number: PCT/JP2006/307059
(87) International publication number: WO 2006/109607

(56) References cited:
- JP-A- 01 067 776
- JP-A- 10 097 771
- JP-A- 10 097 771
- JP-A- 2005 071 416
- JP-A- 2005 078 781
- JP-A- 2006 085 764
- US-A1- 2005 047 289

## Description

### TECHNICAL FIELD

The present invention relates to an optical disk reproduction apparatus and a driving method thereof.

### BACKGROUND ART

Data which is recorded on an optical disk is reproduced by irradiating the rotating optical disk with a light beam having a relatively weak constant light amount, and detecting reflected light which has been modulated by the optical disk.

On a read-only optical disk, information in the form of pits is recorded in a spiral manner, previously during manufacture of the optical disk. On the other hand, in the case of a rewritable optical disk, a method such as vapor deposition is used to deposit a film of recording material which allows for optical data recording/reproduction, on the surface of a base on which a track having spiral land or groove is formed. In the case where data is to be recorded on a rewritable optical disk, the optical disk is irradiated with a light beam whose light amount is modulated in accordance with the data to be recorded, thus causing local changes in the characteristics of the recording material film, whereby a data write is effected.

Note that the depth of the pits, the depth of the track, and the thickness of the recording material film are small relative to the thickness of the base of the optical disk. Therefore, any portion of the optical disk where data is recorded constitutes a two-dimensional surface, and may be referred to as a "recording surface" or an "information surface". In the present specification, since such a surface has a physical size along the depth direction, the term "information layer" will be employed, instead of "recording surface (information surface)". An optical disk includes at least one such information layer. Note that one information layer may actually include a plurality of layers, e.g., a phase-change material layer and a reflective layer.

When reproducing data which is recorded on an optical disk, or recording data onto a recordable optical disk, it is necessary for a light beam to always retain a predetermined convergence state on a target track on the information layer. This requires "focus control" and "tracking control". "Focus control" refers to controlling the position of an objective lens along a normal direction of the information surface so that a focal point of the light beam (convergence point) is always positioned on the information layer. On the other hand, tracking control refers to controlling the position of an objective lens along a radial direction of the optical disk (hereinafter referred to as the "disk radial direction") so that a spot of the light beam is positioned on a predetermined track.

As conventional high-density/large-capacity optical disks, optical disks such as DVD (Digital Versatile Disc)-ROMs, DVD-RAMs, DVD-RWs, DVD-Rs, DVD+RWs, and DVD+Rs have been put to practical use. In addition, CDs (Compact Discs) are still in use. Currently, next-generation optical disks which have a higher density and a larger capacity than those of the above optical disks are being developed and put to practical applications, e.g., Blu-ray Discs (BDs) and HD-DVDs.

Some optical disks have an area called a Burst Cutting Area (BCA: Burst Cutting Area) or a Narrow Burst Cutting Area (NBCA: Narrow Burst Cutting Area). DVD-RAMs and DVD-ROMs have a BCA, whereas DVD-Rs and DVD-RWs have an NBCA.

The BCA or NBCA is formed by processing a portion of a reflective layer near the innermost periphery position of the optical disk, and has a bar-code like slit pattern. In such a slit pattern, information that is unique to each individual optical disk is recorded. The BCA or NBCA pattern is formed during the manufacture of the optical disk, and it is impossible for a usual optical disk apparatus to rewrite the slit pattern.

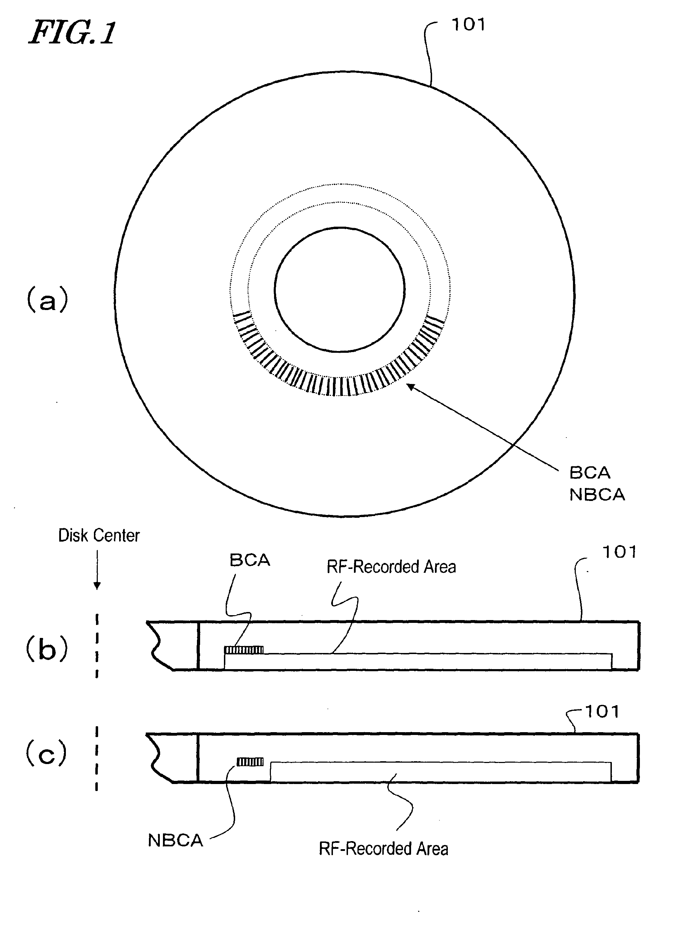

FIG. **1(a)** is a plan view schematically showing an upper face of the optical disk **101** having a BCA or NBCA. FIG. **1(a)** exaggerates the BCA or NBCA to be larger than its actual size. The BCA is formed in an area spanning radial positions from 22.3 to 23.5 mm, whereas the NBCA is formed in an area spanning radial positions from 22.71 to 23.51 mm. Therefore, the width (size along the radial direction) of the BCA is about 1200 µm, and the width (size along the radial direction) of the NBCA is about 800 µm. These widths are as large as more than 1000 times the track pitch.

A reflection film which is formed in the BCA or NBCA has a slit width of about 30 to about 120 µm. Although depending on the rotation speed of the optical disk, the modulation frequency of the light amount amplitude of a light beam which is reflected by the BCA or NBCA is typically as large as about 28kHz to about 112kHz. On the other hand, the modulation frequency of the light amount amplitude of a light beam which is reflected from an area where the main information such as user data is recorded is sufficiently higher than the aforementioned frequency range, and thus a reproduction signal of the main information is a "highfrequency signal". Therefore, in the present specification, an area in which main information such as user data is recorded will be referred to as an "RF-recorded area". A signal which is reproduced from an RF-recorded area may contain various information, but usually contains address information such as a sector address. The address information is used in order to detect which track an irradiated position of the light beam is located on.

Note that, in some cases, encrypted user data may be written to the RF-recorded area. In such cases, decryption is performed by using information that is unique to each individual optical disk, which is recorded in the BCA or NBCA, as an encryption key. Therefore, unless the optical disk apparatus is able to move the irradiated position of a light beam to above the BCA or NBCA, and accurately read the information that is recorded in the BCA or NBCA, the information which is recorded in the RF-recorded area cannot be read and decrypted.

An optical disk apparatus which is capable of reading information from the BCA or NBCA will, before performing an operation of reproducing data from or writing user data to an RF-recorded area of a loaded optical disk, access the BCA or NBCA in order to read the information which is recorded in the BCA or NBCA. The information which is recorded in the BCA or NBCA is utilized for generating an encryption key, or determining whether reproduction is permitted or not.

FIG. **1(b)** is a partial cross-sectional view of an optical disk **101** schematically showing relative positions of the BCA and the RF-recorded area. FIG. **1(c)** is a partial cross-sectional view of the optical disk **101** schematically showing relative positions of the NBCA and the RF-recorded area.

In a DVD-ROM or DVD-RAM, as shown in FIG. **1(b)****,** the BCA is formed so as to overlap the RF-recorded area. In other words, the BCA is located within a lead-in area of the RF-recorded area. On the other hand, as shown in FIG. **1(c)****,** the NBCA is formed at a position which is closer to the disk center than is the RF-recorded area, there being no overlap with the RF-recorded area.

Since a track extending in a spiral shape exists in the RF-recorded area, it is possible to generate a tracking error signal from the RF-recorded area. On the other hand, no information track is formed and no RF signal is recorded in the area which is closer to the disk center than is the RF-recorded area. For this reason, the area which is closer to the disk center than is the RF-recorded area may be referred to as an "RF-unrecorded area". Since no tracking error signal can be reproduced from such an RF-unrecorded area, tracking servo control cannot be performed.

Since the NBCA is formed in the "RF-unrecorded area", tracking servo control can no longer be performed after the irradiated position of a light beam is moved to above the NBCA. However, the NBCA has a width (size along the radial direction) as much as about 800 µm, as described above. Therefore, if the irradiated position of a light beam can be moved to above the NBCA, even in an OFF state of tracking servo control, the irradiated position of the light beam will not deviate from the NBCA over a short period of time, and thus the information in the NBCA can be read.

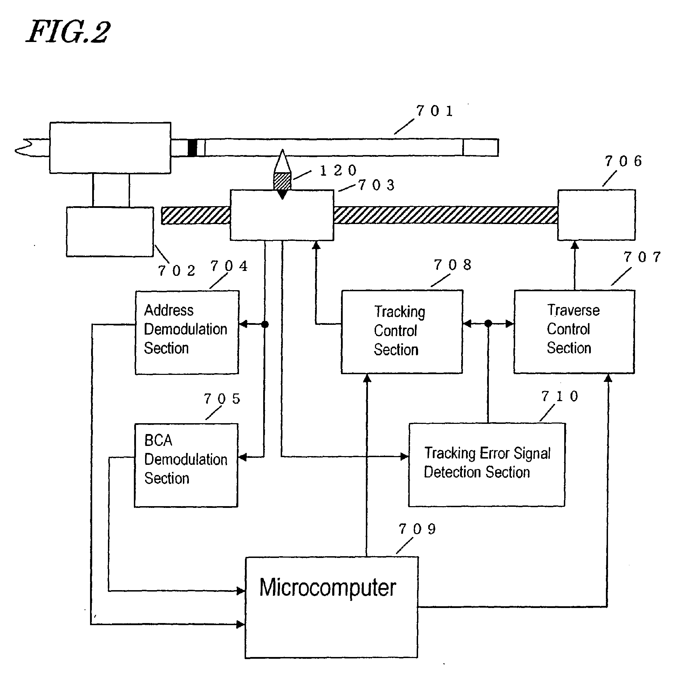

Next, with reference to FIG. **2****,** the construction of a conventional optical disk reproduction apparatus, which is capable of reproducing data from the BCA of an optical disk **701** having a BCA, will be described.

The optical disk reproduction apparatus of FIG. **2** includes: a motor **702** for rotating the optical disk **701;** an optical pickup **703** for irradiating the optical disk **701** with a light beam, and generating an electrical signal from the reflected light; a transport mechanism **706** for moving a base of the optical pickup **703** along a radial direction of the optical disk **701;** and a control section **200** for controlling the aforementioned constituent elements.

The optical pickup **703** includes: a light source (not shown) for emitting a light beam; an objective lens **120** for converging the light beam; a lens actuator (not shown) for controlling the position of the objective lens **120;** and a light amount detector (not shown) for generating an electrical signal from at least a portion of the light beam having been reflected from the optical disk **701.**

The control section **200** includes: an address demodulation section **704** for demodulating a sector address which is contained in the main information based on the electrical signal generated by the optical pickup **703;** a BCA demodulation section **705** for demodulating a BCA signal from the aforementioned electrical signal; a traverse control section **707** for controlling the position of the optical pickup **703** by driving the transport mechanism **706;** a tracking control section **708** for controlling the position of the objective lens in the optical pickup **703** along the radial direction of the optical disk **701;** and a microcomputer **709** for controlling these operations.

In order to reproduce a BCA signal from the BCA of the optical disk **701,** the microcomputer **709** causes the optical pickup **703** to move toward the disk's inner periphery side in accordance with the sector address which has been demodulated by the address demodulation section **704,** whereby the irradiated position of the light beam arrives at the BCA. At this time, the optical pickup **703** is moved by using the traverse control section **707** and the tracking control section **708.** When the irradiated position of the light beam arrives at the BCA, based on the light beam reflected from the BCA, the BCA demodulation section **705** performs demodulation of the BCA signal, whereby the data which is recorded in the BCA is read.

When demodulating the sector address and demodulating the BCA, the microcomputer **709** keeps the tracking servo control in an ON state. When tracking servo control is in an ON state, the tracking control section **708** controls the position (position along the disk radial direction) of the objective lens **120** based on a tracking error signal which is detected by the tracking error signal detection section **710,** and the traverse control section **707** controls the position (position along the disk radial direction) of the base of the optical pickup **703.** As a result, the irradiated position of the light beam is placed on a target track of the optical disk **701.**

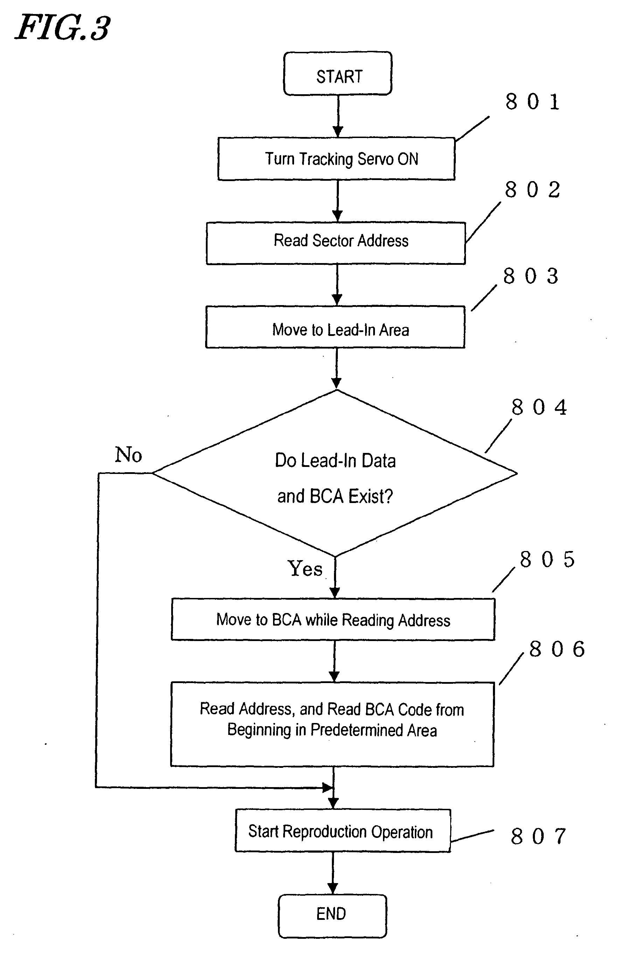

Next, with reference to FIG. **3****,** an operation of the optical disk reproduction apparatus of FIG. **2** will be described.

First, after adjusting the position of the optical pickup **703** so that the irradiated position of the light beam comes within the RF-recorded area of the optical disk **701,** tracking servo control is placed in an ON state at step **801.** The tracking servo control is performed by the tracking control means **708** of FIG. **2****.** Thereafter, at step **802,** the address demodulation section **704** reads a sector address from the RF-recorded area of the optical disk **701.** Based on this sector address, the irradiated position of the light beam on the optical disk **701** can be accurately known.

At step **803,** the irradiated position of the light beam is moved to the lead-in area, which is located toward the innermost periphery side of the RF-recorded area of the optical disk **701.** Presence/absence of the BCA is recorded in the lead-in area. If it is determined at step **804** that "BCA exists" from the content of the lead-in data, at step **805,** the irradiated position of the light beam is moved to the BCA of the optical disk **701** while reading the addresses. During this move, tracking servo control is kept OFF, and the number of tracks traversed by the light beam is counted. When a predetermined number of tracks have been traversed, it can be determined that the irradiated position of the light beam has come into the BCA. When it is determined based on the number of traversed tracks that the irradiated position of the light beam has come into the BCA, tracking servo control is activated and an address is read from the optical disk **701.** Based on this address, it can be confirmed whether the BCA has been reached or not.

At step **806,** if it is confirmed that the irradiated position of the light beam has arrived at the BCA, the BCA demodulation circuit **705** of FIG. **2** reads BCA code from the BCA.

Next, after the optical pickup **703** is moved by the traverse control section **707** so that the irradiated position of the light beam is returned to the RF-recorded area, a reproduction operation is begun at step **807.** The reproduction operation is carried out by using the BCA code.

If it is determined at step **804** that "BCA does not exit" from the content of the lead-in data, the irradiated position of the light beam is moved to the RF-recorded area, and the reproduction operation of step **807** is begun.

Note that, although tracking servo control is temporarily placed in an OFF state when performing the move to the lead-in area at step **803** and the move to the BCA at step **805,** tracking is kept in an ON state while performing a read of the addresses and the BCA.

A method for detecting whether or not the irradiated position of the light beam has arrived at the BCA or NBCA is disclosed in Patent Document 2.
[Patent Document 1] Japanese Laid-Open Patent Publication No. 2001-222821 (FIG. 14)
[Patent Document 2] Pamphlet of International Publication No. WO 05/122150
Patent Document 3 discloses a DVD reproducing apparatus comprising a pickup, a focus actuator, a tracking actuator, a DC motor for moving the pickup in the radial direction, a binarizer, and a data demodulator. The data demodulator demodulates digital data from a signal output by the binarizer, and performs error correction for the data. When the demodulated data for which error correction has been performed is data recorded in an NBCA, the data is output to a microcomputer which includes a jump controller, wherein the jump controller controls the jumping of the pickup across the tracks. For this purpose, the data demodulator includes an NBCA data demodulator. When data output by the binarizer is a signal designating data recorded in the NBCA, the NBCA data demodulator performs a predetermined process for this signal, demodulates the recorded data and performs error correction for the data. When data are to be read from the NBCA of the disk, the jump controller moves the pickup toward the inner circumference of the disk. The jump controller transmits a reading instruction to the NBCA data demodulator, and permits the NBCA data demodulator to read the NBCA data. Then, the jump controller determines whether the NBCA data demodulator could read the NBCA data. When the NBCA data demodulator cannot read the NBCA data, the jump controller assumes that the pickup has not yet moved to the NBCA. This jump operation is repeated until the reading of NBCA data by the NBCA data demodulator is successful, or until the value of a counter for reading the number of jumps reaches six.

### DISCLOSURE OF INVENTION

### PROBLEMS TO BE SOLVED BY THE INVENTION

The above-described optical disk reproduction apparatus may be able to read the BCA, but is not able to read the NBCA, which is located in an area that is closer to the disk center than is the RF-recorded area. The reason is that no track exists at the position where the NBCA is formed, so that no sector addresses to be contained in the RF signal are assigned.

In order to read the NBCA by using the conventional optical disk apparatus, after moving the irradiated position of the light beam to the innermost peripheral edge of the RF-recorded area, the irradiated position of the light beam may be moved toward the disk center from that position, by a distance corresponding to a predetermined number of tracks. Tracking servo control needs to be performed in order to accurately move the irradiated position of the light beam by the predetermined number of tracks, but no tracking error signal can be obtained from the RF-unrecorded area where no track exists as mentioned above.

In order to solve this problem, a high-performance motor (e.g., a stepping motor) having a high positioning accuracy is needed that is capable of moving the optical pickup along the disk radial direction very accurately. However, a motor having a high positioning accuracy such as a stepping motor is expensive, and in a usual optical disk reproduction apparatus, a motor having a high positioning accuracy will not be needed other than for the read operation of the NBCA. Therefore, in order to avoid any cost increase due to an unnecessary function, a DC motor which has a relatively low positioning accuracy and is inexpensive is employed in commonly-used optical disk reproduction apparatuses.

Under the above circumstances, in the case where the transport mechanism for the optical pickup is constructed by using a DC motor having a low positioning accuracy, it is impossible to accurately move the irradiated position of the light beam from the innermost peripheral edge of the RF-recorded area toward the disk center by a distance corresponding to the predetermined number of tracks. The distance (gap) from the innermost peripheral edge of the RF-recorded area to the NBCA is about 300 µm. Even if a traverse operation of the optical pickup is performed so as to aim at the central portion of the NBCA, the distance which is actually traveled by the optical pickup will be uncertain (about 100 to about 300 µm), and it is not possible to detect the position of the optical pickup at the destination of the move. Therefore, unless employing an expensive motor such as a stepping motor, it would be impossible to produce an optical disk reproduction apparatus that is capable of reading the NBCA information, thus presenting a problem in that encrypted data in the RF-recorded area cannot be decrypted in inexpensive popularly-priced products.

Moreover, even if a traverse operation of the optical pickup is performed so as to aim at the central portion of the NBCA, and a successful move to near the center of the NBCA has taken place with a relatively good reproducibility, there may still occur a problem when the NBCA data fails to be appropriately reproduced because of the dust particles or scratches that are present in the NBCA at that position. This problem occurs because the minimum travel distance of the optical pickup using a DC motor cannot be set to a value that is smaller than a predetermined distance (which is typically 300 µm). In other words, even if a necessary electrical signal is supplied to the DC motor with the purpose of moving the optical pickup by just 50 µm, the DC motor will not be driven at all, and no minute move of the optical pickup will occur. Therefore, even if the optical pickup manages to be moved to near the center of the NBCA, if the NBCA data cannot be read from that position, the position of the optical pickup cannot be finely displaced within the NBCA.

Such a problem occurs notably in connection with the NBCA. However, also in the case of reading the BCA with the apparatus of FIG. **2**, tracking servo control may become unstable at the slit portions of the BCA, thus resulting in the problem of being unable to surely move the irradiated position of the light beam to the BCA.

The present invention has been made in view of the above problems, and provides an optical disk reproduction apparatus which is capable of stably reading the NBCA or BCA in the case where tracking servo control cannot be performed in a portion where the RF signal is unrecorded.

### MEANS FOR SOLVING THE PROBLEMS

An optical disk reproduction apparatus according to the present invention is an optical disk reproduction apparatus for, from an optical disk having an Burst Cutting Area, reading information from the Burst Cutting Area, comprising: an optical pickup having: a light source for emitting a light beam, an objective lens for converging the light beam onto the optical disk, a lens actuator for controlling a position of the objective lens, and a photodetector for generating an electrical signal from at least a portion of the light beam having been reflected by the optical disk; a transport mechanism for moving the optical pickup along a radial direction of the optical disk; and area determination means for, based on the electrical signal, determining whether an irradiated position of the light beam on the optical disk is located within the Burst Cutting Area, wherein, when reading information from the Burst Cutting Area, the optical disk reproduction apparatus executes: step A of, by using the transport mechanism, moving the optical pickup from a first pickup position to a second pickup position which is close to the disk center; step B of, by using the lens actuator, placing the objective lens consecutively at a plurality of different lens positions within the optical pickup being at the second pickup position; and step C of, by using the area determination means, determining whether an irradiated position on the optical disk of the light beam converged by the objective lens is located within the Burst Cutting Area or not.

In a preferred embodiment, an interval between the plurality of lens positions within the optical pickup is set to be shorter than a distance from the first pickup position to the second pickup position.

In a preferred embodiment, when it is determined at step C that the irradiated position of the light beam on the optical disk is not located within the Burst Cutting Area, the optical disk reproduction apparatus executes: step D of, by using the transport mechanism, bringing the optical pickup further closer to the disk center; step E of, by using the lens actuator, placing the objective lens consecutively at a plurality of different lens positions within the optical pickup; and step F of, by using the area determination means, determining whether an irradiated position on the optical disk of the light beam converged by the objective lens is located within the Burst Cutting Area or not.

In a preferred embodiment, an interval between the plurality of lens positions within the optical pickup is set to be shorter than a distance traveled by the optical pickup at step D.

In a preferred embodiment, when placing the objective lens consecutively at a plurality of different lens positions within the optical pickup by using the lens actuator, the optical disk reproduction apparatus executes a step of bringing the objective lens closer to the disk center, the step being executed a plurality of times.

In a preferred embodiment, when placing the objective lens consecutively at a plurality of different lens positions within the optical pickup by using the lens actuator, the optical disk reproduction apparatus executes a step of bringing the objective lens away from the disk center, the step being executed at least once.

In a preferred embodiment, the first pickup position is located more toward an outer periphery of the disk than an innermost peripheral edge of a reproduction signal recorded area.

In a preferred embodiment, based on a change in the light amount of the light beam having been reflected by the optical disk, the area determination means determines whether the irradiated position of the light beam on the optical disk is located within the Burst Cutting Area or not.

In a preferred embodiment, if the irradiated position of the light beam on the optical disk is determined to be located within the Burst Cutting Area, the optical disk reproduction apparatus executes, before reading information from the Burst Cutting Area, an operation of bringing the irradiated position of the light beam closer to a central portion of the Burst Cutting Area.

In a preferred embodiment, the Burst Cutting Area is a Narrow Burst Cutting Area.

In a preferred embodiment, the transport mechanism includes a DC motor, and the optical pickup is moved along the radial direction of the optical disk by a rotation of the DC motor.

An driving method for an optical disk reproduction apparatus according to the present invention is a driving method for an optical disk reproduction apparatus which includes an optical pickup having: a light source for emitting a light beam, an objective lens for converging the light beam onto the optical disk, a lens actuator for controlling a position of the objective lens, and a photodetector for generating an electrical signal from at least a portion of the light beam having been reflected from the optical disk, the driving method comprising: when reading, from an optical disk having a Burst Cutting Area, information from the Burst Cutting Area, step A of moving the optical pickup from a first pickup position to a second pickup position which is close to the disk center; step B of, by using the lens actuator, placing the objective lens consecutively at a plurality of different lens positions within the optical pickup being at the second pickup position; and step C of determining whether an irradiated position on the optical disk of the light beam converged by the objective lens is located within the Burst Cutting Area or not.

### EFFECTS OF THE INVENTION

According to the present invention, by allowing the irradiated position of a light beam to be finely displaced while not performing tracking servo control, it becomes possible to surely bring the irradiated position of the light beam to the NBCA or BCA, without employing an expensive motor having a high positioning accuracy.

### BRIEF DESCRIPTION OF DRAWINGS

[FIG. **1**] **(a)** is a plan view schematically showing an upper face of an optical disk **101** having a BCA or an NBCA; **(b)** is a partial cross-sectional view of the optical disk 101, schematically showing relative positions of a BCA and an RF-recorded area; and **(c)** is a partial cross-sectional view of the optical disk **101,** schematically showing relative positions of an NBCA and an RF-recorded area.
[FIG. **2**] A diagram showing the construction of a conventional optical disk reproduction apparatus.
[FIG. **3**] A flowchart of a BCA read operation by a conventional optical disk reproduction apparatus.
[FIG. **4**] A diagram showing a first embodiment of an optical disk reproduction apparatus according to the present invention.
[FIG. **5**] **(a)** is a diagram showing moves along a tracking direction (a radial direction of an optical disk) shown by arrowheads **X;** and **(b)** is a diagram showing moves along a focusing direction (a direction perpendicular to the surface of an optical disk) shown by arrowheads **Y.** Arrowheads **X** are parallel to the radial direction of the optical disk, and are on the plane of the figure of **(a),** but are perpendicular to the plane of the figure of **(b)**.
[FIG. **6**] A diagram showing a process of moving the irradiated position of a light beam from an RF-recorded area to an NBCA of an optical disk.
[FIG. **7**] **(a)** to **(c)** are waveform diagrams of reproduction signals which are obtained with an optical pickup.
[FIG. **8**] **(a)** to **(f)** are diagrams schematically showing an example of transport operations for a base **160** and an objective lens **120.**
[FIG. **9**] **(a)** to **(f)** are diagrams schematically showing another example of transport operations for a base **160** and an objective lens **120.**
[FIG. **10**] **(a)** to **(f)** are diagrams schematically showing still another example of transport operations for a base **160** and an objective lens **120.**
[FIG. **11**] A diagram showing a second embodiment of an optical disk reproduction apparatus according to the present invention.
[FIG. **12**] A diagram showing relative positions of an RF-recorded area and a BCA of an optical disk **101** having a BCA.
[FIG. **13**] **(a)** and **(b)** are waveform diagrams of reproduction signals which are obtained with an optical pickup.

### DESCRIPTION OF THE REFERENCE NUMERALS

**101** optical disk
- **102**: motor
- **103**: optical pickup
- **104**: NBCA in/out determination section
- **105**: NBCA demodulation section
- **106**: transport mechanism
- **107**: traverse control section
- **108**: tracking control section
- **109**: microcomputer
- **110a**: light source
- **110b**: photodetector
- **120**: objective lens
- **130**: lens holder
- **140**: lens-supporting wire
- **150**: support portion
- **160**: base
- **200**: control section
- **201**: arrow indicating move of base
- **202**: arrow indicating move of objective lens
- **404**: BCA in/out determination section
- **405**: BCA demodulation section
- **701**: optical disk
- **702**: motor
- **703**: optical pickup
- **704**: address demodulation section
- **705**: BCA demodulation section
- **706**: transport mechanism
- **707**: traverse control section
- **708**: tracking control section
- **709**: microcomputer
- **710**: tracking error signal detection section

### BEST MODE FOR CARRYING OUT THE INVENTION

In an optical disk reproduction apparatus according to the present invention, through a combination of a traverse operation by a transport mechanism (having a relatively low positioning accuracy) and shifting of an objective lens (which permits moves with a fine pitch), it becomes possible to securely move the irradiated position of a light beam to the NBCA, which exists in an area where no tracking error signal can be generated, this being possible without employing an expensive motor having a high positioning accuracy.

Note that, for simplicity, the term "Burst Cutting Area" in the present specification encompasses not only the usual "BCA", but also the "NBCA".

Hereinafter, preferred embodiments of the present invention will be described.

### (Embodiment 1)

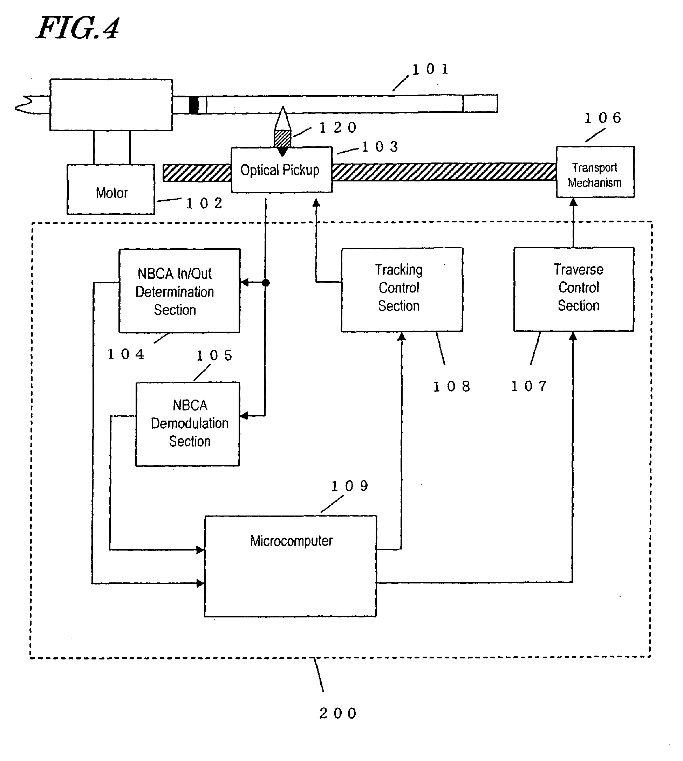

With reference to FIG. **4**, a first embodiment of an optical disk reproduction apparatus according to the present invention will be described. The optical disk reproduction apparatus of the present embodiment is able to read data (e.g., information that is unique to the disk) from the NBCA of an optical disk **101** having an NBCA.

This optical disk reproduction apparatus includes: a spindle motor **102** for rotating the optical disk **101;** an optical pickup **103** for irradiating the optical disk **101** with a light beam, and generating an electrical signal from the reflected light therefrom; a transport mechanism **106** for moving a base of the optical pickup **103** along a radial direction of the optical disk **101;** and a control section **200** for controlling the aforementioned constituent elements.

The control section **200** includes: an NBCA in/out determination section **104** for determining whether the irradiated position of the light beam is located within the NBCA area or not based on the electrical signal generated by the optical pickup **103;** an NBCA demodulation section **105** for demodulating an NBCA signal from the aforementioned electrical signal; a traverse control section **107** for controlling the position of the optical pickup **103** by driving the transport mechanism **106;** a tracking control section **108** for controlling the position of the objective lens in the optical pickup **103** along the radial direction of the optical disk **101;** and a microcomputer **109** for controlling these operations.

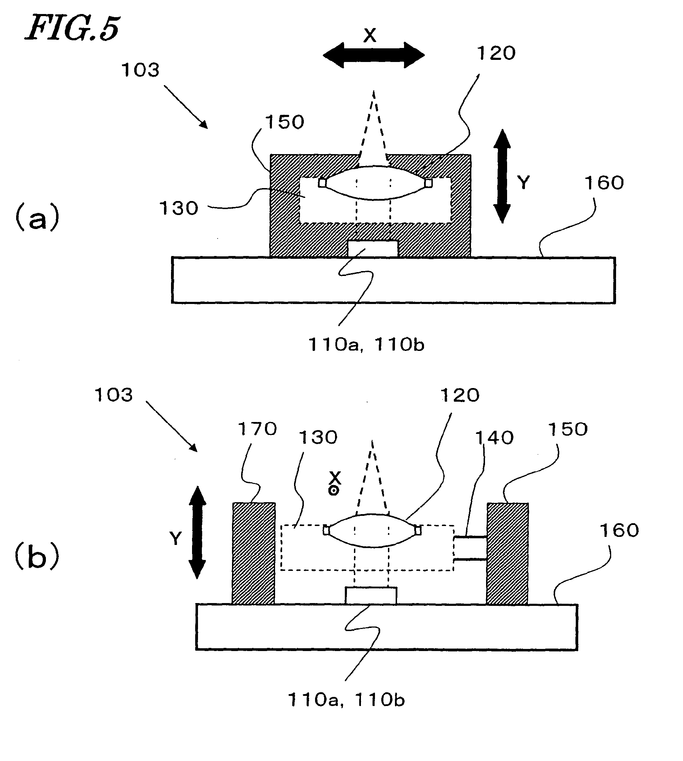

Next, with reference to FIG. **5(a)** and FIG. **5(b)****,** driving of the objective lens **120** in the optical pickup **103** will be described. FIG. **5(a)** is a diagram showing moves along a tracking direction (a radial direction of an optical disk) shown by arrowheads **X,** and FIG. **5(b)** is a diagram showing moves along a focusing direction (a direction perpendicular to the surface of an optical disk) shown by arrowheads **Y**. A plane which is parallel to the plane of the figure of FIG. **5(b)** is orthogonal to arrowheads **X** in FIG. **5(a)****.** A lens actuator **170** shown in FIG. **5(b)** would be located in front of the objective lens **120** in FIG. **5(a)****,** but is omitted from description in FIG. **5(a)** for simplicity.

As shown in FIG. **5(a)** and FIG. **5(b)****,** the optical pickup **103** includes: a light source **110a** for emitting laser light; a photodetector **110b** for receiving reflected light from the optical disk **101** and generating an electrical signal; the objective lens **120** for converging laser light onto the optical disk **101;** a lens holder **130** for holding the objective lens **120;** a support portion **150** for supporting the lens holder **130** via wires **140** having elastic force; a base **160** to which the support portion **150** is fixed; and the lens actuator **170** for moving the positions of the objective lens **120** and the lens holder **130** with respect to the base **160** along directions of arrowheads **X** and arrowheads **Y.**

The actual optical pickup **103** would include a beam splitter(s) and a phase difference plate(s) (not shown), which are known constituent elements and whose detailed descriptions are omitted. Although FIG. **5(a)** and FIG. **5(b)** show only one light source **101a** and one objective lens **120,** they may be provided in plurality.

The position of the base **160** along the direction of arrowheads **X** is controlled by the transport mechanism **106** shown in FIG. **4****.** The transport mechanism **106** of the present embodiment moves the optical pickup **103** with a DC motor. Specifically, the transport mechanism **106** includes a driving force transmission mechanism (not shown) which converts the rotary force of the DC motor to a linear motion by using gears and screws. With such a transport mechanism **106,** the base **160** of the optical pickup **103** can be moved along the direction of arrowheads **X** with an interval of no less than about 300 µm, but its positioning accuracy is as coarse as about 150 to about 300 µm.

On the other hand, the positioning accuracy of the objective lens **120** with respect to the base **160** along the direction of arrowheads **X** is defined by the lens actuator **170,** and is about 5 to about 10 µm even when tracking servo control in an OFF state. The lens actuator **170** forms a magnetic field in accordance with a supplied driving current, thus being able to highly precisely control, with a magnetic force, the relative position of the objective lens **120** against the base **160.**

In the present embodiment, in order to surely bring the irradiated position of the light beam to the NBCA, a coarse transport operation (traverse operation) by the transport mechanism **106** and a fine transport operation (lens shift) of the objective lens **120** by the lens actuator **170** are combined.

Hereinafter, it will be described how a combination of these two types of transport operations makes it possible to surely bring the irradiated position of the light beam to the NBCA even when not performing tracking servo control.

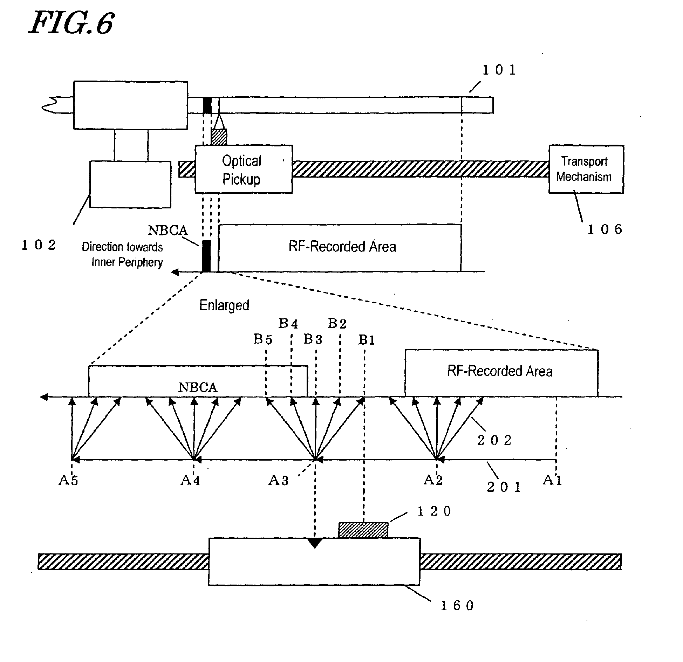

First, FIG. **6** is referred to. FIG. **6** is a diagram showing a process of moving the irradiated position of a light beam from the RF-recorded area to the NBCA of the optical disk **101.** As described earlier, the NBCA is located in an area (RF-unrecorded area) which is closer to the disk center than is the RF-recorded area.

In FIG. **6****,** arrows **201** indicate moves of the base 160 of the optical pickup, whereas arrows **202** indicate moves of the objective lens **120.** Moreover, positions **A1** to **A5** indicate, respectively, the central positions (pickup positions) of the base **160** when the optical pickup **103** come to consecutive stops. Specifically, assuming that the center of the base **160** is initially at position **A1,** the base **160** may be consecutively moved from position **A1** to position **A2,** and from position **A2** to position **A3,** with the action of the transport mechanism **106.** Although positions **A1** to **A5** are shown at equal intervals in the figure, in actuality, there are variations among these intervals because of the low positioning accuracy of the transport mechanism **106.** Moreover, since the optical disk **101** has some eccentricity, the irradiated position of the light beam may also be deviated along the radial direction with the rotation of the optical disk **101.** Therefore, when the base **160** is moved from position **A1** to position **A2** by the transport mechanism **106,** for example, the actual location (position along the radial direction) of position **A2** cannot be known exactly.

Since the positioning accuracy of the transport mechanism **106** is several hundred µm, when moving the irradiated position of the light beam from the RF-recorded area to the NBCA, an attempt to move the irradiated position of the light beam from the RF-recorded area to the NBCA in one time might incur the risk of allowing the irradiated position of the light beam to pass over the NBCA. Even if the irradiated position of the light beam can be moved from the RF-recorded area to the NBCA in one time, if NBCA data cannot be read at that position, as described earlier, the base 160 may not be able to be finely moved within the NBCA, depending on the particular transport mechanism **106.**

Therefore, in the present embodiment, driving of the transport mechanism **106** is controlled as finely as possible to ensure sufficiently small intervals (about 300 µ m) between positions **A1** to **A5;** the position of the objective lens **120** is shifted with a high precision at each of positions **A1** to **A5** by the lens actuator **170;** and it is detected whether the irradiated position of the light beam is located on the NBCA or not. For example, if the center of the base **160** is at position **A3**, the center of the objective lens **120** may be moved in five steps, from lens position **B1** to lens position **B5.** The movable range of the objective lens **120** is about 300 µm or more along the disk radial direction, for example. If the number of moves of the objective lens **120** is set to four, the interval between positions **B1** to **B5** may be set to 300/5=60 µm. The travel distance of the objective lens **120** in one time must be set to be smaller than the travel distance of the optical pickup 103 in one time, and is preferably set within the range of no less than 10 µm and no more than 100 µm, for example. As the distance of the lens shift becomes shorter, the number of lens shifts will increase, thus resulting in a longer amount of time being required for completing the large number of shift operations. The number of lens shifts at each individual pickup position may be set to about 3 to about 30, for example.

In the example shown in FIG. **6****,** while the optical pickup **103** is at position **A3**, the irradiated position of the light beam is not at the NBCA when the objective lens **120** is at any of lens positions **B1** to **B3.** However, when the objective lens **120** is at any of lens positions **B4** to **B5,** the irradiated position of the light beam is on the NBCA.

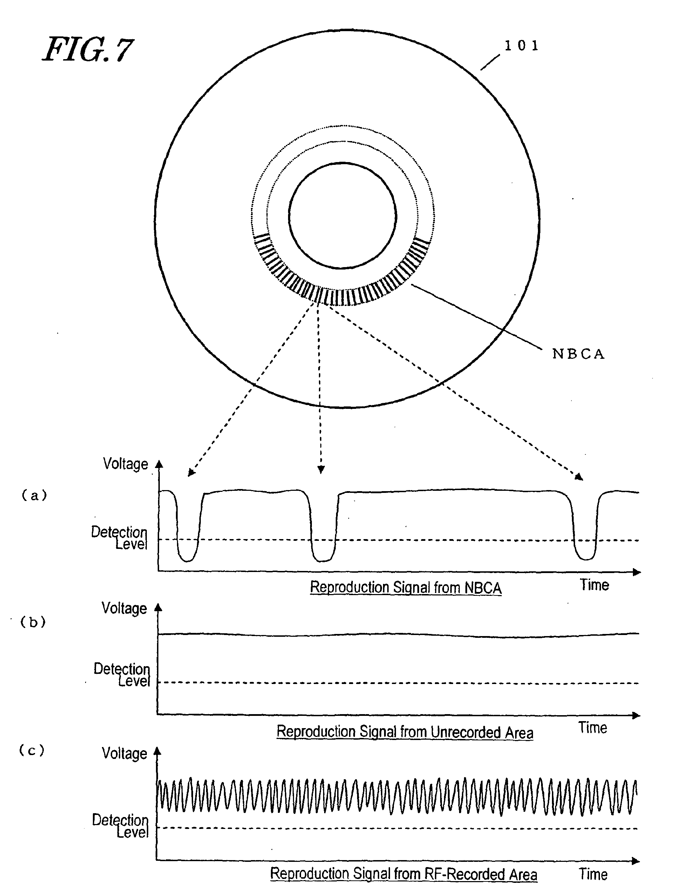

It can be determined with the NBCA in/out determination section **104** shown in FIG. **4** as to whether the irradiated position of the light beam is on the NBCA or not. Every time the position of the optical pickup **103** is brought closer to the disk center by the transport mechanism **106** and the position of the objective lens **120** is changed at each pickup position, it must be determined in the NBCA in/out determination section **104** as to whether the irradiated position of the light beam is on the NBCA not. Hereinafter, the operation of the NBCA in/out determination section **104** will be described with reference to FIG. **7****.**

FIGS. **7(a)** to **(c)** are waveform diagrams of reproduction signals which are obtained with the optical pickup **103.** In the RF-recorded area of the optical disk **101,** a large number of recording marks having a relatively low reflectance are formed; therefore, as shown in FIG. **7(c)****,** a reproduction signal which is obtained from the RF-recorded area fluctuates with a high frequency. On the other hand, in the RF-unrecorded area of the optical disk **101,** the reflectance is maintained at a high and constant value; therefore, as shown in FIG. **7(b)****,** a reproduction signal which is obtained from the RF-unrecorded area is substantially constant. However, from the NBCA, i.e., a portion of the RF-unrecorded area where slits are formed in the reflection film, a reproduction signal whose amplitude is reduced in the slit portions is obtained, as shown in FIG. **7(a)****.**

Therefore, as shown in FIG. **7(a)** to FIG. **7(c)****,** by setting the detection level (threshold value) to an appropriate value, and measuring the periods (corresponding to the slit portions) during which the level of the reproduction signal is equal to or less than the detection level, it becomes possible to detect whether the irradiated position of the light beam is on the NBCA or not. This "detection level" needs to be set to a level for detecting a decrease in the intensity of reflected light at the slit portions (i.e., portions where the reflection film is removed) of the NBCA, and is set to a value which is lower than the intensity of reflected light in the areas where the reflection film exists and higher than the intensity of reflected light from the slit portions of the NBCA. This detection level may be changed as appropriate in accordance with the type of the optical disk.

In the present embodiment, when the proportion of the periods during which the reproduction signal stays equal to or less than the detection level becomes equal to or greater than a predefined value (e.g., 8.3%), it is determined that the irradiated position of the light beam is at the NBCA. The reason for not immediately determining the irradiated position of the light beam to be within the "NBCA" area when the reproduction signal becomes equal to or less than the detection level for a short period of time is that the light amount of the reflected light may have a temporary decrease when the light beam traverses a scratch or a dust particle existing on the surface of the optical disk **101**. Thus, it is ensured that such cases will not be wrongly determined as being "within the NBCA area".

The determination operation by the NBCA in/out determination section **104** can be executed without reading any information that is actually recorded in the NBCA, and thus enables a rapid determination. In order to read any information that is recorded in the NBCA, it would be necessary to demodulate the BCA data based on the reproduction signal, thus resulting in extra time being spent.

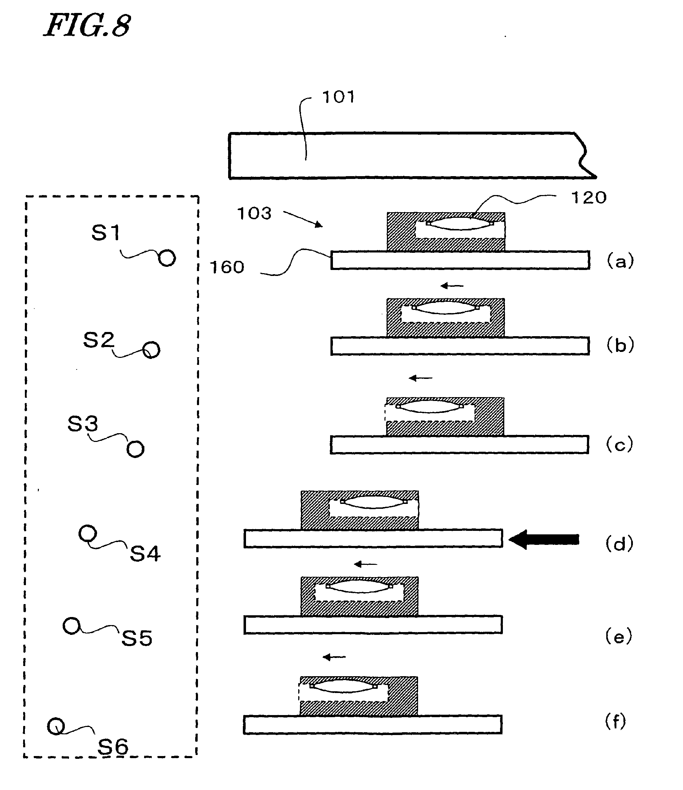

Next, with reference to FIG. **8(a)** to FIG. **8(f)****,** the transport operations for the base **160** of the pickup **103** and the objective lens **120** will be specifically described. FIG. **8(a)** to FIG. **8(f)** are diagrams schematically describing transport operations for the base **160** and the objective lens **120.** FIG. **8(a)** shows the positions of the base **160** and the objective lens **120** at the start of the transport operations, and FIG. **8(b)** shows the positions of the base **160** and the objective lens **120** after the lapse of a predetermined time (e.g., 20 milliseconds to 40 milliseconds). FIG. **8(c)** to FIG. **8(f)** show how the transport operations are consecutively executed. In the frame of broken lines in the left-hand side of FIG. **8****,** spots **S1** to **S6** schematically represent the irradiated positions of the light beam in FIG. **8(a)** to FIG. **8(f)****,** respectively. It is indicated, the irradiated position of the light beam is moved toward the left (toward the disk center) with lapse of time.

In the present embodiment, as shown in FIG. **8(a)** to FIG. **8(c)**, after the base **160** is moved to a first pickup position, the objective lens **120** is moved toward the disk center without moving the base **160.** This move of the objective lens **120** is performed by the lens actuator **170** included in the optical pickup **103,** and thus provides a high positioning accuracy.

Next, the base **160** is moved to a second pickup position which is closer to the disk center as shown in FIG. **8(d)****,** and also the objective lens **120** is moved in a direction away from the disk center. Since the move of the optical pickup **103** is performed by the transport mechanism **106,** it is difficult to accurately know its travel distance.

Thereafter, as shown in FIG. **8(e)** to FIG. **8(f)****,** the objective lens **120** is moved toward the disk center without moving the base **160.**

While performing the above-described transport operations, detection of the NBCA by the NBCA in/out determination section **104** is carried out. In the example shown in FIG. **6****,** the NBCA will be detected by the NBCA in/out determination section **104** when the objective lens **120** comes to lens position **B4** while the optical pickup **103** is at position **A3**. Note that the NBCA detection process itself may be performed not only when the objective lens **120** (lens shift) has been moved within the optical pickup **103,** but also when the base **160** has been moved.

Next, with reference to FIG. **4** and FIG. **6****,** an initial operation of the optical disk reproduction apparatus of the present embodiment will be described.

Upon boot, or when the optical disk **101** is loaded, the optical disk reproduction apparatus of the present embodiment first reads control data from the optical disk **101** to determine whether the loaded optical disk **101** is an optical disk having an NBCA or not. The control data is a portion of the main information, and is recorded as an RF signal. In the example of FIG. **6****,** the optical pickup is at position **A1** while reading the control data, and tracking servo control is in operation.

When beginning read of the NBCA, the microcomputer 109 keeps the tracking control by the tracking control section **108** in an OFF state. Next, the traverse control section **107** is employed to move the base **160** in a direction towards the inner periphery of the optical disk **101.** Although a predetermined level of current or voltage is supplied to the DC motor of the transport mechanism **106** for a predetermined period, the resultant travel distance of the optical pickup **103** has a low reproducibility as described earlier, and is liable to variation. In the example of FIG. **6****,** the optical pickup **103** moves to position **A2**.

Thereafter, by using the tracking control section **108,** the objective lens **120** is moved to a plurality of different lens positions **B1** to **B5** along the radial direction of the optical disk **101.** The order of moving the objective lens **120** among lens positions **B1** to **B5** may be arbitrary. For example, after first locating the objective lens **120** at lens position **B1,** which is at the outermost peripheral side, it is determined with the NBCA in/out determination section **104** as to whether the irradiated position of the light beam is within the NBCA or not. If it is determined to be outside the NBCA, the objective lens **120** is moved in a direction towards the inner periphery, and an NBCA in/out determination is performed at lens position **B2.**

The distance traveled by the objective lens **120** in one move is shorter than the distance traveled by the base **160** moves in one move.

Through a combination of the relatively coarse move of the base **160** and the relatively fine move of the objective lens **120,** it becomes possible to introduce fine changes in the irradiated position of the light beam. In the present embodiment, NBCA in/out determinations are made while moving the irradiated position of the light beam from the RF-recorded area with a fine pitch, and thus the NBCA can be surely detected.

Once the irradiated position of the light beam has arrived on the NBCA, the NBCA data is read by the NBCA demodulation section **105.** Note that, in the case where the irradiated position of the light beam is close to the end of the NBCA toward the disk's outer periphery, the irradiated position of the light beam may deviate from the NBCA with the rotation of the optical disk **101** if the optical disk **101** is eccentric. In order to surely read the NBCA data, it is preferable that the irradiated position of the light beam is close to the central portion of the NBCA, rather than to the end of the NBCA toward the disk's outer periphery.

The irradiated position of the light beam being near the end of the NBCA toward the disk's outer periphery can be detected when the waveform of FIG. **7(a)** and the waveform of FIG. **7(b)** alternately appear. In other words, if the periods (corresponding to the slit portions) during which the level of the reproduction signal is equal to or less than the detection level do not exceed a predetermined period, it can be determined that the irradiated position of the light beam is deviated from the NBCA. In such a case, before performing a read operation of the NBCA data, the irradiated position of the light beam is preferably moved toward the central portion of the NBCA. Specifically, the objective lens **120** may be shifted within the optical pickup **103** by a minute distance (e.g., about several tens of µm to about 100 µm) toward the disk's inner periphery side, or the optical pickup **103** itself may be moved toward the disk's inner periphery side. However, since the move of the optical pickup **103** needs to be performed by the transport mechanism **106,** it is difficult to set the minimum travel distance to 300 um or less, and the positioning accuracy is as poor as about 150 to about 300 µm. Based on the fact that the NBCA has a width of about 800 µm, it is preferable to move the objective lens **120** toward the disk's inner periphery side, without moving the optical pickup **103.** If it is detected that the irradiated position of the light beam has reached the NBCA, the objective lens **120** may be universally moved by a predetermined distance toward the disk's inner periphery side, irrespective of whether the irradiated position of the light beam is near the outer periphery of the disk or not.

Thus, after the irradiated position of the light beam has surely come within the NBCA, the NBCA data is read by the NBCA demodulation section **105,** and if a successful read of the NBCA data is made, the NBCA read operation is ended. However, in some cases, the NBCA data may not be read because of a scratch or the like existing on the NBCA. In such cases, the irradiated position of the light beam is further moved by a minute distance toward the disk's inner periphery side, and a read of the NBCA data is retried. As a result of consecutive instances of being unable to read the NBCA, if the irradiated position of the light beam has gone outside the NBCA, moving of irradiated position of the light beam is stopped. Thereafter, a move to the RF-recorded area is made, and a reproduction operation which does not require the NBCA information is begun for the RF-recorded area.

Thus, in accordance with the optical disk reproduction apparatus of the present embodiment, even when tracking servo control is unavailable in a portion where the RF signal is unrecorded, it is possible to read the NBCA without employing an expensive motor to enhance the positioning accuracy of the transport mechanism.

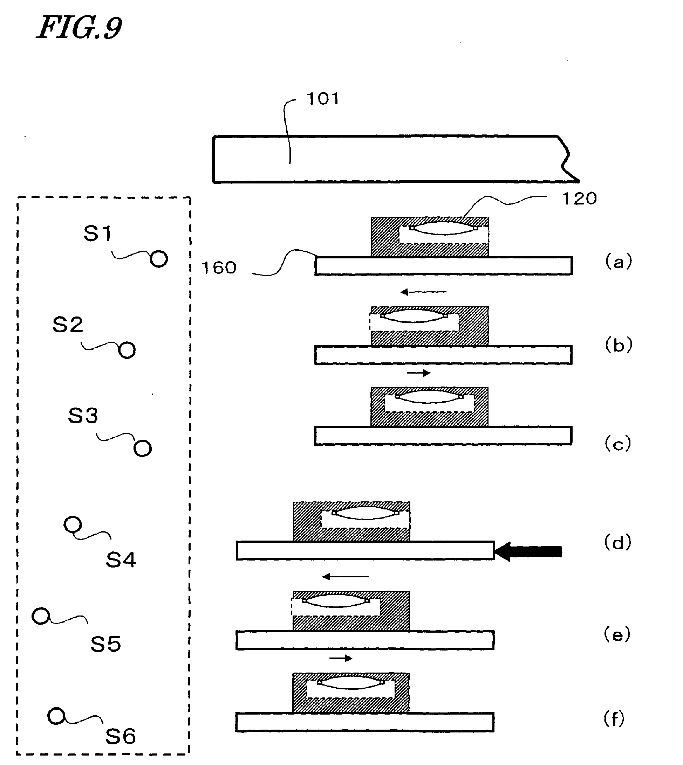

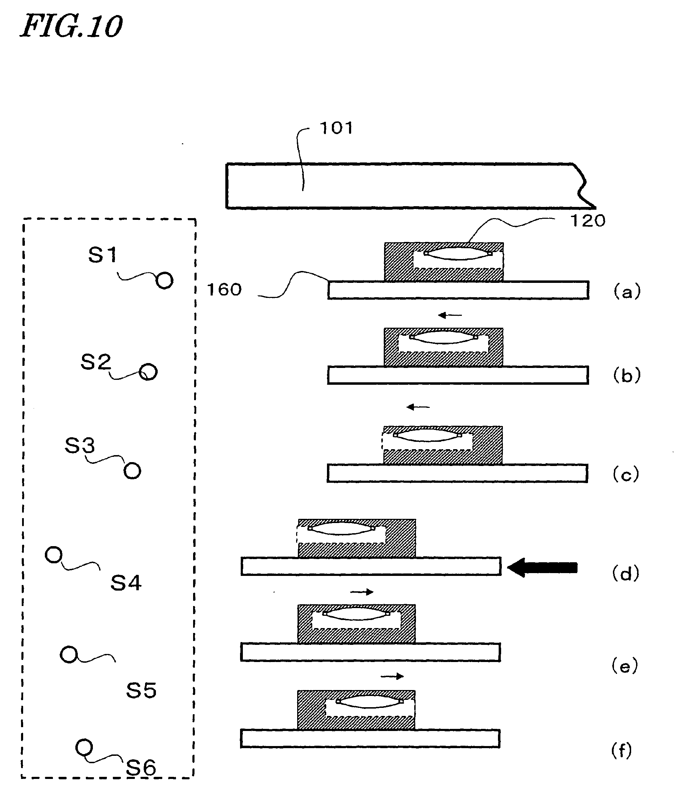

Note that the order of moving the objective lens 120 among a plurality of lens positions at the stop position of the optical pickup **103** is not limited to the above-described example. For example, as shown in FIG. **9(a)** to FIG. **9(f)**, at each pickup position, after being moved from the outermost periphery side to the innermost periphery side, the objective lens **120** may be returned to the central position. Moreover, as shown in FIG. **10(a)** to FIG. **10(f)****,** the move direction of the objective lens **120** may be reversed at each pickup position. Furthermore, the number of lens positions at each pickup position only needs to be plural, without being limited to three or five.

Moreover, when first moving the optical pickup **103** from the RF-recorded area toward the NBCA, the travel distance of the optical pickup **103** may be set so that it will come into the NBCA in a single move. In that case, after the first move of the optical pickup **103,** an area determination is performed, and upon determining that the irradiated position of the light beam is within the NBCA, the NBCA data may be read without performing any lens shift at that position. In some cases, the NBCA data may not be read at that position due to dust particles, scratches, or other causes. In such cases, while keeping the optical pickup **103** stopped, a lens shift may be made by a minute distance (e.g., 10 to 100 µm), and thereafter a read of the NBCA data may be performed. If it is determined that the irradiated position of the light beam has deviated outside the NBCA as a result of such a lens shift, a lens shift may be performed so that the irradiated position of the light beam will return into the NBCA, and the NBCA data may be read after returning into the NBCA.

### (Embodiment 2)

Hereinafter, a second embodiment of an optical disk reproduction apparatus according to the present invention will be described.

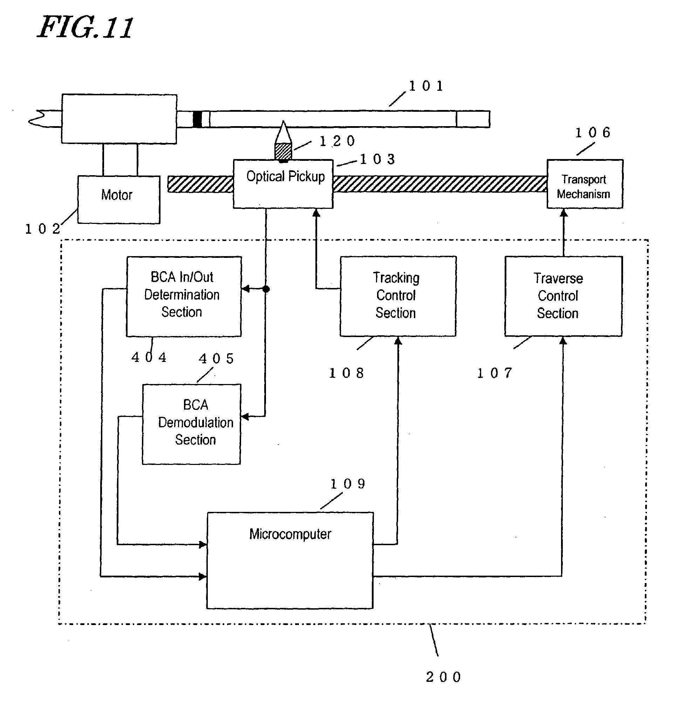

First, FIG. **11** is referred to. FIG. **11** is a block diagram of the optical disk reproduction apparatus of the present embodiment.

The construction of the optical disk reproduction apparatus of the present embodiment differs from the construction of the optical disk reproduction apparatus of Embodiment 1 in that the optical disk reproduction apparatus of the present embodiment includes a BCA in/out determination section **404** and a BCA demodulation section **405,** instead of the NBCA in/out determination section **104** and the NBCA demodulation section **105.** Since the other constituent elements are common between the two embodiments, such common portions will be omitted from description herein.

Based on a reproduction signal from the optical pickup **103,** the BCA area determination section **404** determines whether the irradiated position of the light beam is located within the BCA area or not. Based on the reproduction signal from the optical pickup **103,** the BCA demodulation section **405** demodulates a BCA signal.

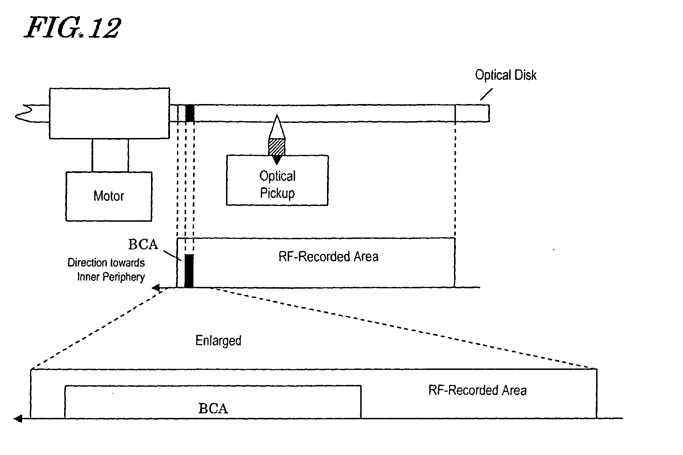

FIG. **12** shows relative positions of an RF-recorded area and a BCA of an optical disk **101** having a BCA. Since the BCA exists within the RF-recorded area, it might be possible to generate a tracking error signal from the BCA and perform tracking servo control. However, according to the present embodiment, when reading the BCA data, tracking servo control is kept in an OFF state at the inner periphery side within the RF-recorded area. Thereafter, by combining transport operations for the optical pickup **103** and the objective lens **120** with a method similar to the method that has been described with respect to Embodiment 1, determinations by the BCA in/out determination section **404** are performed while moving the irradiated position of the light beam toward the BCA by minute distances, and therefore the BCA can be detected with a high accuracy.

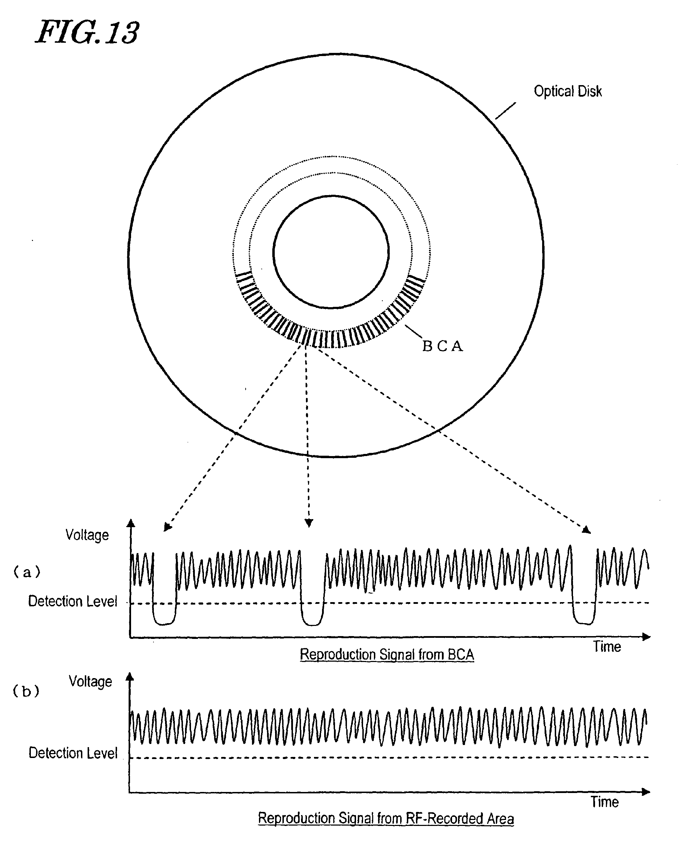

FIG. **13** is a waveform diagram of reproduction signals obtained with the optical pickup **103.** The detection level is a threshold value against which the BCA in/out determination section **404** determines being inside or outside the BCA. If the proportion of time of being equal to or less than the detection level accounts for a predefined ratio or greater, a determination is made that it is inside the BCA. Thus, the BCA in/out determination section **404** has a similar function to that of the NBCA in/out determination section 104.

FIG. **13(a)** and FIG. **13(b)** are waveform diagrams of reproduction signals which are obtained with the optical pickup **103.** In the RF-recorded area of the optical disk **101,** a large number of recording marks having a relatively low reflectance are formed; therefore, as shown in FIG. **13(b)**, a reproduction signal which is obtained from the RF-recorded area fluctuates with a high frequency. From the BCA, i.e., a portion of the RF-recorded area where slits are formed in the reflection film, a reproduction signal whose amplitude is reduced in the slit portions is obtained, as shown in FIG. **7(a)****.**

Therefore, as shown in FIG. **13(a)** and FIG. **13(b)****,** by setting the detection level (threshold value) to an appropriate value, and measuring the periods (corresponding to the slit portions) during which the level of the reproduction signal is equal to or less than the detection level, it becomes possible to detect whether the irradiated position of the light beam is on the BCA or not. This "detection level" needs to be set to a level for detecting a decrease in the intensity of reflected light at the slit portions (i.e., portions where the reflection film is removed) of the BCA, and is set to a value which is lower than the intensity of reflected light in the areas where the reflection film exists and higher than the intensity of reflected light from the slit portions of the BCA.

In the present embodiment, when the proportion of the periods during which the reproduction signal stays equal to or less than the detection level becomes equal to or greater than a predefined value (e.g., 8.3%), it is determined that the irradiated position of the light beam is at the BCA. Thus, the BCA in/out determination section **404** operates in a similar manner to the NBCA in/out determination section **104,** and upon determining that the irradiated position of the light beam is on the BCA, the BCA demodulation section **405** demodulates the BCA data. Note that tracking servo control is kept in an OFF state during the BCA in/out determination and the BCA data demodulation.

Thus, not only when reading the NBCA but also when reading the BCA, it is possible to move the irradiated position of the light beam to the BCA while keeping OFF the tracking servo control, and read the BCA. According to the present embodiment, a stable read of the BCA can be achieved without performing tracking servo control, whose operation is likely to become unstable due to the presence of the BCA.

The NBCA in/out determination section **104** and the BCA in/out determination section **404** in the above embodiments function as an "area determination means" according to the present invention. However, the area determination means is not limited to those having the constructions according to the above embodiments. For example, it would be possible to adopt a construction which, based on whether the Burst Cutting Area information can be decoded or not, determines whether the irradiated position of the light beam is located within the Burst Cutting Area or not.

Note that the constitution of the control section **200** in the above embodiments may be implemented in hardware, or implemented by a combination of hardware and software.

### INDUSTRIAL APPLICABILITY

An optical disk reproduction apparatus according to the present invention makes it possible to read the NBCA even if the transport mechanism of an optical pickup has an inexpensive motor, and thus is useful for allowing optical disk reproduction apparatuses to gain prevalence.

## Claims

1. An optical disk reproduction apparatus for, from an optical disk (101) having an Burst Cutting Area, reading information from the Burst Cutting Area, comprising:
an optical pickup (103) having: a light source (110a) for emitting a light beam, an objective lens (120) for converging the light beam onto the optical disk (101), a lens actuator (170) for controlling a position of the objective lens (120), and a photodetector (110b) for generating an electrical signal from at least a portion of the light beam having been reflected by the optical disk (101);
a transport mechanism (106) for moving the optical pickup (103) along a radial direction of the optical disk (101); and
area determination means for, based on the electrical signal, determining whether an irradiated position of the light beam on the optical disk (101) is located within the Burst Cutting Area, wherein,
when reading information from the Burst Cutting Area, the optical disk reproduction apparatus executes:
step A of, by using the transport mechanism (106), moving the optical pickup (103) from a first pickup position to a second pickup position which is close to the disk center;
step B of, by using the area determination means, determining whether an irradiated position on the optical disk (101) of the light beam converged by the objective lens (120) is located within the Burst Cutting Area or not, wherein,
when it is determined at step B that the irradiated position of the light beam on the optical disk (101) is not located within the Burst Cutting Area, the optical disk reproduction apparatus repeats the step A to step B until the irradiated position of the light beam on the optical disk (101) is located within the Burst Cutting Area:
**characterized in that**
the optical disk reproduction apparatus executes step C of, by using the lens actuator (170), placing the objective lens (120) consecutively at a plurality of different lens positions within the optical pickup (103) being at the second pickup position between the step A and the step B.

2. The optical disk reproduction apparatus of claim 1, wherein an interval between the plurality of lens positions within the optical pickup (103) is set to be shorter than a distance from the first pickup position to the second pickup position..

3. The optical disk reproduction apparatus of claim 1, wherein an interval between the plurality of lens positions within the optical pickup (103) is set to be shorter than a distance traveled by the optical pickup (103) at step A.

4. The optical disk reproduction apparatus of claim 1, wherein, when placing the objective lens (120) consecutively at a plurality of different lens positions within the optical pickup (103) by using the lens actuator(170), the optical disk reproduction apparatus executes a step of bringing the objective lens (120) closer to the disk center, the step being executed a plurality of times.

5. The optical disk reproduction apparatus of claim 4, wherein, when placing the objective lens (120) consecutively at a plurality of different lens positions within the optical pickup (103) by using the lens actuator (170), the optical disk reproduction apparatus executes a step of bringing the objective lens (120) away from the disk center, the step being executed at least once.

6. The optical disk reproduction apparatus of claim 1, wherein the first pickup position is located more toward an outer periphery of the disk than an innermost peripheral edge of a reproduction signal recorded area.

7. The optical disk reproduction apparatus of claim 1, wherein, based on a change in the light amount of the light beam having been reflected by the optical disk (101), the area determination means determines whether the irradiated position of the light beam on the optical disk (101) is located within the Burst Cutting Area or not.

8. The optical disk reproduction apparatus of claim 1, wherein, if the irradiated position of the light beam on the optical disk (101) is determined to be located within the Burst Cutting Area, the optical disk reproduction apparatus executes, before reading information from the Burst Cutting Area, an operation of bringing the irradiated position of the light beam closer to a central portion of the Burst Cutting Area.

9. The optical disk reproduction apparatus of claim 1, wherein the Burst Cutting Area is a Narrow Burst Cutting Area.

10. The optical disk reproduction apparatus of claim 1, wherein the transport mechanism (106) includes a DC motor, and the optical pickup (103) is moved along the radial direction of the optical disk (101) by a rotation of the DC motor.

11. A driving method for an optical disk reproduction apparatus which includes an optical pickup (103) having: a light source (110a) for emitting a light beam, an objective lens (120) for converging the light beam onto the optical disk (101), a lens actuator(170) for controlling a position of the objective lens (120), and a photodetector (110b) for generating an electrical signal from at least a portion of the light beam having been reflected from the optical disk (101), the driving method comprising:
when reading, from an optical disk (101) having a Burst Cutting Area, information from the Burst Cutting Area,
step A of moving the optical pickup (103) from a first pickup position to a second pickup position which is close to the disk center;
step B of determining whether an irradiated position on the optical disk (101) of the light beam converged by the objective lens (120) is located within the Burst Cutting Area or not, wherein,
when it is determined at step B that the irradiated position of the light beam on the optical disk (101) is not located within the Burst Cutting Area, the following steps are executed: repeating the step A to step B until the irradiated position of the light beam on the optical disk (101) is located within the Burst Cutting Area:
**characterized in that**
the method executes step C of, by using the lens actuator (170), placing the objective lens (120) consecutively at a plurality of different lens positions within the optical pickup (103) being at the second pickup position between the step A and the step B.

## Patentansprüche

1. Optische Plattenwiedergabevorrichtung, mit der von einer optischen Platte (101) mit einem BCA (Burst Cutting Area) Informationen aus dem BCA gelesen werden, wobei sie umfasst:
einen optischen Aufnehmer (103), der eine Lichtquelle (110a) zum Emittieren eines Lichtstrahls, eine Objektivlinse (120) zum Bündeln des Lichtstrahls auf die optische Platte (101), ein Linsen-Stellglied (170) zum Steuern einer Position der Objektivlinse (120) und einen Fotodetektor (110b) zum Erzeugen eines elektrischen Signals aus wenigstens einem Teil des Lichtstrahls, der durch die optische Platte (101) reflektiert worden ist, aufweist;
einen Transportmechanismus (106) zum Bewegen des optischen Aufnehmers (103) in einer radialen Richtung der optischen Platte (101); und
eine Bereichsbestimmungseinrichtung, mit der auf Basis des elektrischen Signals bestimmt wird, ob sich eine Bestrahlungsposition des Lichtstrahls auf der optischen Platte (101) innerhalb des BCA befindet, wobei
beim Lesen von Informationen aus dem BCA die optische Plattenwiedergabevorrichtung ausführt:
Schritt A, in dem unter Verwendung des Transportmechanismus (106) der optische Aufnehmer (103) von einer ersten Aufnehmerposition an eine zweite Aufnehmerposition bewegt wird, die sich nahe an der Plattenmitte befindet;
Schritt B, in dem unter Verwendung der Bereichsbestimmungseinrichtung bestimmt wird, ob sich eine Bestrahlungsposition des durch die Objektivlinse (120) gebündelten Lichtstrahls auf der optischen Platte (101) innerhalb des BCA befindet oder nicht, wobei
wenn in Schritt B bestimmt wird, dass sich die Bestrahlungsposition des Lichtstrahls auf der optischen Platte (101) nicht innerhalb des BCA befindet, die optische Plattenwiedergabevorrichtung Schritt A bis Schritt B wiederholt, bis sich die Bestrahlungsposition des Lichtstrahls auf der optischen Platte (101) innerhalb des BCA befindet,
**dadurch gekennzeichnet, dass**
die optische Plattenwiedergabevorrichtung Schritt C ausführt, indem unter Verwendung des Linsen-Stellgliedes (170) die Objektivlinse (120) zwischen dem Schritt A und dem Schritt B nacheinander an eine Vielzahl verschiedener Linsenpositionen innerhalb des optischen Aufnehmers (103) gebracht wird, der sich an der zweiten Aufnehmerposition befindet.

2. Optische Plattenwiedergabevorrichtung nach Anspruch 1, wobei ein intervall zwischen der Vielzahl von Linsenpositionen innerhalb des optischen Aufnehmers (103) so eingestellt wird, dass es kürzer ist als ein Abstand von der ersten Aufnehmerposition zu der zweiten Aufnehmerposition.

3. Optische Plattenwiedergabevorrichtung nach Anspruch 1, wobei ein Intervall zwischen der Vielzahl von Linsenpositionen innerhalb des optischen Aufnehmers (103) so eingestellt wird, dass es kürzer ist als ein durch den optischen Aufnehmer (103) in Schritt A zurückgelegte Strecke.

4. Optische Plattenwiedergabevorrichtung nach Anspruch 1, wobei, wenn die Objektivlinse (120) unter Verwendung des Linsen-Stellgliedes (170) nacheinander an eine Vielzahl verschiedener Linsenpositionen innerhalb des optischen Aufnehmers (103) gebracht wird, die optische Plattenwiedergabevorrichtung einen Schritt ausführt, in dem die Objektlinse (120) näher an die Plattenmitte gebracht wird, wobei der Schritt mehrmals ausgeführt wird.

5. Optische Plattenwiedergabevorrichtung nach Anspruch 4, wobei, wenn die Objektivlinse (120) unter Verwendung des Linsen-Stellgliedes (170) nacheinander an eine Vielzahl verschiedener Linsenpositionen innerhalb des optischen Aufnehmers (103) gebracht wird, die optische Plattenwiedergabevorrichtung einen Schritt ausführt, in dem die Objektivlinse (120) von der Plattenmitte entfernt wird, wobei der Schritt wenigstens einmal ausgeführt wird.

6. Optische Plattenwiedergabevorrichtung nach Anspruch 1, wobei sich die erste Aufnahmeposition weiter in Richtung auf einen Außenumfang der Platte zu als ein am weitesten innen liegender Umfangsrand eines Wiedergabesignal-Aufzeichnungsbereiches befindet.

7. Optische Plattenwiedergabevorrichtung nach Anspruch 1, wobei auf Basis einer Änderung der Lichtmenge des Lichtstrahls, der durch die optische Platte (101) reflektiert wird, die Bereichsbestimmungseinrichtung bestimmt, ob sich die Bestrahlungsposition des Lichtstrahls auf der optischen Platte (101) innerhalb des BCA befindet oder nicht.

8. Optische Plattenwiedergabevorrichtung nach Anspruch 1, wobei, wenn bestimmt wird, dass sich die Bestrahlungsposition des Lichtstrahls auf der optischen Platte (101) innerhalb des BCA befindet, die optische Plattenwiedergabevorrichtung vor dem Lesen von Informationen aus dem BCA einen Vorgang ausführt, in dem die Bestrahlungsposition des Lichtstrahls näher an einen Mittelabschnitt des BCA gebracht wird.

9. Optische Plattenwiedergabevorrichtung nach Anspruch 1, wobei der BCA ein NBCA (Narrow Burst Cutting Area) ist.

10. Optische Plattenwiedergabevorrichtung nach Anspruch 1, wobei der Transportmechanismus (106) einen Gleichstrommotor enthält und der optische Aufnehmer (103) durch eine Drehung des Gleichstrommotors in der radialen Richtung der optischen Platte (101) bewegt wird.

11. Antriebsverfahren für eine optische Plattenwiedergabevorrichtung, die einen optischen Aufnehmer (103) enthält, der eine Lichtquelle (110a) zum Emittieren eines Lichtstrahls, eine Objektivlinse (120) zum Bündeln des Lichtstrahls auf die optische Platte (101), ein Linsen-Stellglied (170) zum Steuern einer Position der Objektivlinse (120) und einen Fotodetektor (110b) zum Erzeugen eines elektrischen Signals aus wenigstens einem Teil des Lichtstrahls, der durch die optische Platte (101) reflektiert worden ist, aufweist; wobei das Antriebsverfahren umfasst:
wenn von einer optischen Platte (101) mit einem BCA (Burst Cutting Area) Informationen aus dem BCA gelesen werden,
Schritt A, in dem der optische Aufnehmer (102) von einer ersten Aufnehmerposition an eine zweite Aufnehmerposition bewegt wird, die sich nahe an der Plattenmitte befindet;
Schritt B, in dem bestimmt wird, ob sich eine Bestrahlungsposition des durch die Objektivlinse (120) gebündelten Lichtstrahls auf der optischen Platte (101) innerhalb des BCA befindet oder nicht, wobei
wenn in Schritt B bestimmt wird, dass sich die Bestrahlungsposition des Lichtstrahls auf der optischen Platte (101) nicht innerhalb des BCA befindet, die folgenden Schritte ausgeführt werden:
Wiederholen von Schritt A bis Schritt B, bis sich die Bestrahlungsposition des Lichtstrahls auf der optischen Platte (101) innerhalb des BCA befindet,
**dadurch gekennzeichnet, dass**
das Verfahren Schritt C ausführt, indem unter Verwendung des Linsen-Stellgliedes (170) die Objektivlinse (120) zwischen dem Schritt A und dem Schritt B nacheinander an eine Vielzahl verschiedener Linsenpositionen innerhalb des optischen Aufnehmers (103) gebracht wird, der sich an der zweiten Aufnehmerposition befindet.

## Revendications

1. Appareil de reproduction de disque optique pour lire à partir d'un disque optique (101) ayant une Zone Centrale d'Etiquetage, des informations depuis le Zone Centrale d'Etiquetage, comprenant:
un capteur optique (103) ayant: une source lumineuse (110a) pour émettre un faisceau lumineux, une lentille de focalisation (120) pour converger le faisceau lumineux sur le disque optique (101), un actionneur de lentille (170) pour commander une position de la lentille de focalisation (120), et un photodétecteur (110b) pour générer un signal électrique depuis au moins une partie du faisceau lumineux ayant été réfléchi par le disque optique (101);
un mécanisme de transport (106) pour déplacer le capteur optique (103) le long d'une direction radiale du disque optique (101); et
un moyen de détermination de zone pour déterminer, sur la base du signal électrique, si une position irradiée du faisceau lumineux sur le disque optique (101) est située dans la Zone Centrale d'Etiquetage, où
en lisant des informations depuis la Zone Centrale d'Etiquetage, l'appareil de reproduction de disque optique exécute:
une étape A consistant à déplacer, en utilisant le mécanisme de transport (106), le capteur optique (103) d'une première position de lecture à une deuxième position de lecture qui est plus proche du centre du disque;
une étape B consistant à déterminer, en utilisant le moyen de détermination de zone, si une position irradiée sur le disque optique (101) du faisceau lumineux convergé par la lentille de focalisation (120) est située ou non dans la Zone Centrale d'Etiquetage, où,
lorsqu'on détermine à l'étape B que la position irradiée du faisceau lumineux sur le disque optique (101) n'est pas située dans la Zone Centrale d'Etiquetage, l'appareil de reproduction de disque optique répète l'étape A à l'étape B jusqu'à ce que la position irradiée du faisceau lumineux sur le disque optique (101) soit située dans la Zone Centrale d'Etiquetage;
**caractérisé en ce que**
l'appareil de reproduction de disque optique exécute une étape C consistant à placer consécutivement, en utilisant l'actionneur de lentille (170), la lentille de focalisation (120) à plusieurs positions de lentille différentes dans le capteur optique (103) à la deuxième position de lecture entre l'étape A et l'étape B.

2. Appareil de reproduction de disque optique de la revendication 1, dans lequel un intervalle entre la pluralité de positions de lentille dans le capteur optique (103) est établi de manière à être plus court qu'une distance de la première position de lecture à la deuxième position de lecture.

3. Appareil de reproduction de disque optique de la revendication 1, dans lequel un intervalle entre la pluralité de positions de lentille dans le capteur optique (103) est établi de manière à être plus court qu'une distance parcourue par le capteur optique (103) à l'étape A.

4. Appareil de reproduction de disque optique de la revendication 1, dans lequel, en plaçant consécutivement la lentille de focalisation (120) à plusieurs positions de lentille différentes dans le capteur optique (103) en utilisant l'actionneur de lentille (170), l'appareil de reproduction de disque optique exécute une étape consistant à rapprocher la lentille de focalisation (120) du centre du disque, l'étape étant exécutée plusieurs fois.

5. Appareil de reproduction de disque optique de la revendication 4, dans lequel, en plaçant consécutivement la lentille de focalisation (120) à plusieurs positions de lentille différentes dans le capteur optique (103) en utilisant l'actionneur de lentille (170), l'appareil de reproduction de disque optique exécute une étape consistant à éloigner la lentille de focalisation (120) du centre du disque, l'étape étant exécutée au moins une fois.

6. Appareil de reproduction de disque optique de la revendication 1, dans lequel la première position de lecture est située plus vers une périphérie externe du disque qu'un bord périphérique le plus à l'intérieur d'une zone enregistrée de signal de reproduction.

7. Appareil de reproduction de disque optique de la revendication 1, dans lequel, sur la base d'un changement dans la quantité de lumière du faisceau lumineux ayant été réfléchi par le disque optique (101), le moyen de détermination de zone détermine si la position irradiée du faisceau lumineux sur le disque optique (101) est située ou non dans la Zone Centrale d'Etiquetage.

8. Appareil de reproduction de disque optique de la revendication 1, dans lequel, si on détermine que la position irradiée du faisceau lumineux sur le disque optique (101) est située dans la Zone Centrale d'Etiquetage, l'appareil de reproduction de disque optique exécute, avant de lire les informations depuis la Zone Centrale d'Etiquetage, une opération consistant à rapprocher la position irradiée du faisceau lumineux d'une partie centrale de la Zone Centrale d'Etiquetage.

9. Appareil de reproduction de disque optique de la revendication 1, dans lequel la Zone Centrale d'Etiquetage est une Zone Centrale d'Etiquetage Etroite.

10. Appareil de reproduction de disque optique de la revendication 1, dans lequel le mécanisme de transport (106) comporte un moteur à courant continu, et le capteur optique (103) se déplace le long de la direction radiale du disque optique (101) par une rotation du moteur à courant continu.

11. Procédé d'entraînement pour un appareil de reproduction de disque optique qui comporte un capteur optique (103) ayant: une source lumineuse (110a) pour émettre un faisceau lumineux, une lentille de focalisation (120) pour converger le faisceau lumineux sur le disque optique (101), un actionneur de lentille (170) pour commander une position de la lentille de focalisation (120), et un photodétecteur (110b) pour générer un signal électrique depuis au moins une partie du faisceau lumineux ayant été réfléchi depuis le disque optique (101), le procédé d'entraînement comprenant:
en lisant, depuis un disque optique (101) ayant une Zone Centrale d'Etiquetage, des informations depuis la Zone Centrale d'Etiquetage,
une étape A consistant à déplacer le capteur optique (103) d'une première position de lecture à une deuxième position de lecture qui est proche du centre du disque;
une étape B consistant à déterminer si une position irradiée sur le disque optique (101) du faisceau lumineux convergé par la lentille de focalisation (120) est située ou non dans la Zone Centrale d'Etiquetage, où,
lorsqu'on détermine à l'étape B que la position irradiée du faisceau lumineux sur le disque optique (101) n'est pas située dans la Zone Centrale d'Etiquetage, les étapes suivantes sont exécutées; répéter l'étape A à l'étape B jusqu'à ce que la position irradiée du faisceau lumineux sur le disque optique (101) soit située dans la Zone Centrale d'Etiquetage:
**caractérisé en ce que**
le procédé exécute l'étape C pour placer consécutivement, en utilisant l'actionneur de lentille (170), la lentille de focalisation (120) à plusieurs positions de lentille différentes dans le capteur optique (103) qui est à la deuxième position de lecture entre l'étape A et l'étape B.
